# EUROPÄISCHE PATENTSCHRIFT

(11) **EP 3 345 063 B1**
(45) Veröffentlichungstag und Bekanntmachung des Hinweises auf die Patenterteilung: **04.03.2026**
(21) Anmeldenummer: 16721161.4
(22) Anmeldetag: 06.05.2016
(51) Int. Cl.: G05B 23/02

(54) **VERFAHREN ZUR COMPUTERUNTERSTÜTZTEN PROGNOSE ZUKÜNFTIGER BETRIEBSZUSTÄNDE VON MASCHINENKOMPONENTEN**
METHOD FOR THE COMPUTER-AIDED FORECASTING OF FUTURE OPERATING STATES OF MACHINE COMPONENTS
PROCÉDÉ DE PRONOSTIC ASSISTÉ PAR ORDINATEUR D'ÉTATS DE FONCTIONNEMENT FUTURS DE COMPOSANTS DE MACHINE

(30) Priorität: 01.09.2015 DE 102015114605
(43) Veröffentlichungstag der Anmeldung: 11.07.2018
(73) Patentinhaber: Walther Flender GmbH, 40593 Düsseldorf (DE)
(72) Erfinder: SCHOLZEN, Andreas, 47447 Moers (DE); SCHMIDT, Simon-Martin, 40470 Düsseldorf (DE)
(74) Vertreter: Cohausz & Florack
(86) Internationale Anmeldenummer: PCT/EP2016/060189
(87) Internationale Veröffentlichungsnummer: WO 2017/036615

(56) Entgegenhaltungen:
- EP-A2- 1 136 201
- DE-A1- 102010 045 911
- US-A1- 2013 173 202
- XIANG LI ET AL: "An Intelligent Predictive Engine for Milling Machine Prognostic Monitoring", INDUSTRIAL INFORMATICS, 2006 IEEE INTERNATIONAL CONFERENCE ON, IEEE, PI, 1 August 2006 (2006-08-01), pages 1075 - 1080, XP031003503, ISBN: 978-0-7803-9700-2

## Beschreibung

Die Erfindung betrifft ein Verfahren, mit dem sich computerunterstützt zukünftige Zustände, wie ein bevorstehendes Schadensereignis, ein Wartungsbedarf, das Erreichen der maximalen Einsatzdauer und desgleichen voraussagen lassen.

Als "Maschinenkomponente" werden nachfolgend einzelne Maschinenelemente oder zu bestimmten Aggregaten zusammengefasste Gruppen von miteinander interagierenden Maschinenelementen verstanden. Bei den betrachteten Maschinenelementen handelt es sich jeweils um eine kleinste technische Funktionseinheit, die geeignet ist, die sich aus der jeweils betrachteten technischen Anwendung ergebenden technisch funktionalen Anforderungen zu erfüllen. Der Begriff "Maschinenkomponente" umfasst dementsprechend auch die bei der Herstellung von Maschinenkomponenten oder deren Maschinenelementen verwendeten einzelnen Bauteile.

In vielen Anwendungsfällen sind Maschinenkomponenten der hier in Rede stehenden Art im praktischen Einsatz hohen Belastungen unterschiedlichster Art ausgesetzt. Die Belastungen können die Folge von Kräften, die von der jeweiligen Komponente aufgenommen werden, oder von Umweltbedingungen (z.B. Umgebungstemperatur, Umgebungsatmosphäre) sein, unter denen der Betrieb der Maschinenkomponente stattfindet. Zu den Maschinenkomponenten, die derartigen Belastungen ausgesetzt sind, zählen insbesondere bewegte Bauteile, wie Räder, Rollen, Walzen, Wellen, Ringe, Ketten, Riemen, wie Zahnriemen, Keilriemen, Flachriemen oder Vielkeilriemen, die beispielsweise in Antrieben eingesetzt werden, Scheiben oder Scheibenprofile, Dichtungen, Zahnräder, Federn, sowie Schläuche, oder Baugruppen, die selber unter Last bewegt werden oder deren Bauteile sich im Einsatz unter Last bewegen, wie Verzahnungen, Getriebe, Antriebseinheiten allgemein, insbesondere Riemenantriebe, wie Zahnriemenantriebe, Motoren, Kupplungen allgemein, insbesondere Rutschkupplungen, Spannsätze / Wellen-Naben-Verbindungen, Freiläufe, Wälzlager, Gleitlager, Bremsen, Antriebsstränge und desgleichen.

Dabei ist jede dieser Maschinenkomponenten in der Regel für die Maschine, in der sie eingesetzt wird, funktionswesentlich. Infolge dessen kommt es regelmäßig zu einer Betriebsstörung, wenn die jeweilige Maschinenkomponente nicht ordnungsgemäß funktioniert oder gar versagt. Die durch eine solche Betriebsstörung verursachten wirtschaftlichen Schäden können insbesondere in der großindustriellen Fertigung beträchtlich sein. Daher werden Maschinenkomponenten üblicherweise einer regelmäßigen Wartung unterzogen und dabei so rechtzeitig ersetzt oder instandgesetzt, dass das Risiko eines spontanen Versagens minimiert ist. Die Wartungsarbeiten folgen dabei in der Regel einem vom Hersteller der Maschine oder der Maschinenkomponente unter Berücksichtigung von Erfahrungswerten, Auslegungskriterien und der Einsatzbedingungen festgelegten Wartungsplan.

Bei besonders funktionskritischen Maschinenkomponenten ist es darüber hinaus üblich, bestimmte Parameter, wie die Temperaturentwicklung, die aufgenommenen Lasten und desgleichen, systematisch zu überwachen, um Überlastungen der betreffenden Komponente und ein vorzeitiges Versagen zu vermeiden. Erreicht der jeweils überwachte Parameter einen bestimmten Grenzwert, so wird dies üblicherweise als Warnsignal gewertet, auf das hin eine Aktion ausgelöst wird. Diese Aktion kann beispielsweise darin bestehen, dass die die Grenzwertüberschreitung auslösende Belastung reduziert wird, um den überwachten Parameter wieder in den für ihn vorgesehenen Normalbereich zu bringen, oder darin, dass die betreffende Maschinenkomponente einer Wartung unterzogen wird, um verschleißbedingtem Versagen vorzubeugen und so eine dauerhafte Funktion der Komponente zu gewährleisten. Auch die Grenzwerte, deren Erreichen die jeweilige Aktion auslöst, beruhen dabei in der Regel auf Erfahrungswerten, die entweder vom Maschinenhersteller dem Maschinenbetreiber mitgeteilt oder vom Maschinenbetreiber aufgrund von praktischen Erfahrungen im Einsatz gefunden werden.

Problematisch ist dabei, dass sowohl die Erfassung des oder der für den Betriebszustand der jeweils betrachteten Maschinenkomponente wesentlichen Parameter(s) als auch die Ermittlung des jeweiligen Grenzwerts stets einer Interpretation von Messwerten und Einsatzbedingungen bedarf. Das Ergebnis dieser Interpretation ist entweder von der Erfahrung des Maschinenbetreibers bzw. des Maschinenführers, d.h. der Person, die die Maschine bedient und überwacht, oder von der Qualität der Erfahrungswerte und des Interpretationsmodells abhängig, die oder das der Hersteller der jeweiligen Maschinenkomponente oder der mit ihr ausgestatteten Maschine der Handlungsempfehlungen zu Grunde legt, die er für den Fall gibt, dass der überwachte Parameter den jeweils als kritisch erachteten Grenzwert erreicht.

"An Intelligent Predictive Engine for Milling Machine Prognostic Monitoring" (XIANG Li et al., 2006 IEEE INTERNATIONAL CONFERENCE ON INDUSTRIAL INFORMATICS, IEEE, PI, 1. August 2006 (2006-08-01), Seiten 1075-1080, ISBN: 978-0-7803-9700-2) präsentiert eine intelligente prädiktive Maschine (Intelligent Predictive Engine, IPE) für Anwendungen in der prognostischen Überwachung und Ausfallvorhersage von Maschinen. Die IPE wurde mit eingebetteten Datenverarbeitungs- und Analysewerkzeugen konzipiert und entwickelt, die auf multiplen Regressionsmodellen und künstlichen neuronalen Netzen basieren. Eine Fallstudie zur Vorhersage der Restnutzungsdauer von Fräsmaschinen wird vorgestellt, um die Anwendbarkeit der IPE in der Werkzeugindustrie zu demonstrieren. In der Fallstudie wird ein Vergleich der Vorhersageleistung der verschiedenen Modelle angestellt, die mit demselben Satz von Versuchsdaten erstellt wurden. Das neuronale Backpropagation-Netzwerk zeigt eine deutlich bessere Leistung als die anderen Modelle zur Lösung des prognostischen Problems der Vorhersage der Werkzeuglebensdauer auf einer Fräsmaschine. Die Algorithmen in der IPE sind generisch und können für verschiedene Anwendungsszenarien eingesetzt werden, die eine prognostische Analyse der Ausrüstung erfordern.

Vor dem Hintergrund des voranstehend erläuterten, in der betrieblichen Praxis üblichen Vorgehens hat sich die Aufgabe ergeben, ein Verfahren zu schaffen, mit dem sich ein im Lebenszyklus einer Maschinenkomponente bevorstehendes Ereignis mit hoher Sicherheit reproduzierbar voraussagen lässt.

Die Erfindung hat diese Aufgabe durch das in Anspruch 1 angegebene Verfahren gelöst.

Vorteilhafte Ausgestaltungen der Erfindung sind in den abhängigen Ansprüchen angegeben und werden nachfolgend im Einzelnen erläutert.

Das erfindungsgemäße Verfahren zur computerunterstützten Prognose zukünftiger Betriebszustände von Maschinenkomponenten, umfasst demnach folgende Arbeitsschritte:
A) Für die jeweils betrachtete Maschinenkomponente wird mindestens ein Parameter ausgewählt, der für den Zustand der Maschinenkomponente repräsentativ ist.
B) Der Parameter wird im laufenden Einsatz der Maschinenkomponente als Messwert erfasst.
C) Der erfasste Messwert wird unter Berücksichtigung des Anwendungsfalls, bei dem die Maschinenkomponente zum Einsatz kommt, in einen automatisch ablaufenden Prozess zur Auffindung einer Handlungsempfehlung eingespeist, wobei folgende Vorgehensweise zu Grunde gelegt wird:
   C.a) Für die jeweils betrachtete Maschinenkomponente sind Eigenschaften und die diese Eigenschaften bestimmenden Einflussgrößen ermittelt worden.
   C.b) Für die jeweils betrachtete Maschinenkomponente sind die in Frage kommenden Anwendungen bestimmt, die Einflussgrößen, denen die Maschinenkomponente bei der jeweiligen Anwendung ausgesetzt ist, ermittelt, die sich stellenden Einflussgrößen formuliert und bestimmt worden, welche Einflussgrößen dementsprechend bei der Interpretation des erfassten Messwertes und der daraus abgeleiteten Handlungsempfehlung zu betrachten sind.
   C.c) Aus beim praktischen Einsatz der betrachteten Maschinenkomponente gewonnenen Aussagen zu den Einflussgrößen oder aus auf die Einflussgrößen bezogene Aussagen, die durch systematische experimentelle Untersuchungen gewonnen werden, werden die Wechselwirkungen und Auswirkungen der Einflussgrößen ermittelt und in Zusammenhang mit bestimmten Schadensereignissen gebracht.
      Stellt sich bei laufender Nutzung des Verfahrens heraus, dass solche bisher noch nicht identifizierte Einflussgrößen und Auswirkungen existieren, so werden diese neu erkannten Einflussgrößen oder Auswirkungen zur Gruppe der zu betrachtenden und in Wechselwirkung mit anderen stehenden Einflussgrößen oder damit in Zusammenhang gestellten Schadensereignissen hinzugefügt.
      Können die produkt- oder anwendungsspezifischen Wechselwirkungen mit einer Regel formelmäßig beschrieben werden, so wird diese Regel formuliert, sobald die Wechselwirkungen bekannt werden. Alternativ oder ergänzend können die Wechselwirkungen auch in Form von unscharfen Beschreibungen ("Fuzzy-Logik", künstliche neuronale Netzwerke, sonstige Methoden der künstlichen Intelligenz) der Zusammenhänge erfasst werden.
   C.d) Die in Arbeitsschritt C.c) zu den Wechselwirkungen und dadurch beeinflussten Schadensereignissen ermittelten Informationen (Einflussgrößen, Regeln, unscharfe Beschreibungen von Wechselwirkungen) werden als maschinenlesbare Daten in eine Datenbank eingespeist.
      Diese Datenbank kann ein, zwei oder mehrere Einzeldatenbanken umfassen, die jeweils auf bestimmte Anwendungsfälle und damit verkoppelte Schadensereignisse bezogene maschinenlesbare Daten enthalten. Informationen, die zu sich gegenseitig beeinflussenden Anforderungen und Einflussgrößen ermittelt werden, werden in der Datenbank optional so miteinander verknüpft, dass Änderungen an der einen Information direkte Auswirkungen auf die mit ihr verknüpfte(n) andere(n) Information(en) haben. In der Datenbank wird so ein Geflecht aus miteinander in Beziehung gesetzten und mit bestimmten Maschinenkomponenten verknüpften Informationen erzeugt, die auf eine Vielzahl von unterschiedlichen Anwendungen und damit verkoppelte Schadensereignisse bezogen sind.
   C.e) Die jeweilige Anwendung, der erfasste Messwert und die zugeordneten Einflussgrößen werden als Eingangsgrößen in einen auf einem Computer laufenden Auswahlalgorithmus eingespeist, der unter Berücksichtigung der Eingangsgrößen und des erfassten Messwerts anhand der in der Datenbank abgelegten Informationen die für die Verwendung bei der jeweiligen Anwendung optimal passende Handlungsempfehlung auswählt.
      Es wird also der erfasste Messwert anhand der in der Datenbank abgelegten und miteinander in Zusammenhang gebrachten, auf praktischen Erfahrungen beruhenden Informationen interpretiert und so eine die Besonderheiten des jeweiligen Anwendungsfalls berücksichtigende Handlungsempfehlung gegeben.
      Dabei sind für die Ableitung einer auf die jeweilige Anwendung bezogenen und unter Berücksichtigung des erfassten Messwerts erfolgenden Handlungsempfehlung die sich bei der betreffenden Anwendung stellenden Einflussgrößen formuliert worden (Arbeitsschritt C.b)).

Zur laufenden Verbesserung der durch die Arbeitsschritte C.a) - C.d) für den Auswahlschritt (Arbeitsschritt C.e)) geschaffenen Datenbasis werden ergänzend folgende Arbeitsschritte absolviert:
C.f) Die Maschinenkomponente, für die der jeweils betrachtete Messwert erfasst und in der im Arbeitsschritt C.e) angegebenen
   Weise interpretiert wird, wird hinsichtlich des Anwendungsfalls, bei dem sie eingesetzt wird, eindeutig identifiziert.
C.g) Dazu wird die ausgewählte Maschinenkomponente in ihrem praktischen Einsatz anhand des Identifikationsmittels identifiziert und überwacht.
   Das Identifikationsmittel kann dabei nicht nur Informationen tragen, die die jeweilige Maschinenkomponente eindeutig identifiziert, sondern auch Informationen über die Beschaffenheit der Maschinenkomponente enthalten, um so beispielsweise die Zuordnung der durch die Überwachung erhaltenen Messwerte einer bestimmten Eigenschaftskombination der betrachteten Maschinenkomponente einfach zuordnen zu können.
   Die Überwachung liefert im einfachsten Fall neben dem erfassten Messwert eine Aussage über mindestens einen weiteren Kennwert, wie beispielsweise über die Zeitdauer, die zwischen dem Beginn der Nutzung und der Erfassung des jeweiligen Messwerts vergangen ist. Ergänzend liefert die Überwachung auch Aussagen über zwei oder mehrere weitere Kennwerte über die äußeren Einflüsse (Temperatur, Atmosphäre), denen die Maschinenkomponente im Einsatz ausgesetzt war. Das Identifikationsmittel kann zudem selber so ausgerüstet sein, dass es Aussagen über den inneren Zustand und die Belastungen des Maschinenelements im Betrieb liefert. Selbstverständlich können ebenso andere an sich bekannte Messmethoden eingesetzt werden, um die bei der Nutzung im Maschinenelement herrschenden Kräfte, seine Längenveränderungen, Temperaturentwicklung und desgleichen zu erfassen (s. hierzu für das Beispiel eines Riemenantriebs US 6,264,577 B1, DE 10 2010 002 551A1, JP 2009-007078 A, DE 44 44 263 C1, US 5,843,258 A, AU 2009203049 A1).
C.h) Die im Arbeitsschritt C.g) erfassten Aussagen werden als Einflussgrößen in den mit Arbeitsschritt C.c) beginnenden Prozess eingespeist.

Mit den ergänzend durchgeführten Arbeitsschritten C.f) bis C.h) ist ein selbstlernendes, sich ständig verbesserndes und die praktische Wirklichkeit immer besser abbildendes selbstlernendes Auswahlsystem geschaffen. Dabei muss selbstverständlich nicht jede in erfindungsgemäßer Weise ausgewählte Maschinenkomponente die ergänzenden Arbeitsschritte C.f) bis C.h) durchlaufen, sondern es kann ausreichend sein, wenn mindestens eine Maschinenkomponente, optimaler Weise eine repräsentative Anzahl von Maschinenkomponenten, in der jeweiligen Anwendung überwacht wird.

Die Erfindung beruht somit auf denselben Prinzipien, wie das Verfahren zur Auswahl einer Maschinenkomponente, das in der europäischen Patentanmeldung EP 3 292 520 A1 vorgestellt worden ist.

Die Erfindung erweitert dabei das genannte, in der europäischen Patentanmeldung EP 3 292 520 A1 beschriebene Verfahren um die Möglichkeit, basierend auf einem für eine bestimmte Maschinenkomponente erfassten Messwert eine Handlungsempfehlung zu ermitteln, bei der die für den jeweiligen Anwendungsfall typischen und systematisch miteinander verknüpften Einflussgrößen berücksichtigt werden.

Das erfindungsgemäße Verfahren ermöglicht auf diese Weise, ausgehend von dem jeweils erfassten Messwert und auf Grundlage der für den jeweiligen Anwendungsfall ermittelten und durch systematische Versuchsreihen oder die Erfassung praktischer Erfahrung ermittelten Einflussgrößen und ihrer Zusammenhänge eine zielsichere, automatisch erstellte Prognose über die Position, an der sich die jeweils betrachtete Maschinenkomponente in ihrem Lebenszyklus befindet.

Die sich aus dieser Prognose ergebende Handlungsempfehlung bildet in Folge dessen mit hoher Genauigkeit den tatsächlichen Handlungsbedarf ab. So kann die erfindungsgemäß ermittelte Handlungsempfehlung für eine innerhalb eines bestimmten Zeitraums abzuwickelnde Wartung mit dem Ziel, den Normalzustand der Maschinenkomponente aufrecht zu erhalten, in der Empfehlung für einen bis zu einem bestimmten konkret benannten Zeitpunkt erfolgenden Ersatz, um einen nach diesem Zeitpunkt mit hoher Sicherheit zu erwartenden spontanen Ausfall vorzubeugen, oder in einem Abwarten bestehen, wenn sich der erfasste Messwert als unkritisch, d.h. einen Normalzustand belegend, herausgestellt hat.

Da die erfindungsgemäß ermittelte Handlungsempfehlung zu einem Zeitpunkt abgegeben wird, an dem noch kein Schadensereignis vorliegt, erlaubt die erfindungsgemäße Vorgehensweise eine hohe Planungssicherheit. Wartungsarbeiten oder der Ersatz einer Maschinenkomponente können dann zu einem Zeitpunkt ausgeführt werden, an dem ein Stillstand der jeweiligen Maschine geplant ist, wie beispielsweise an einem Wochenende oder bei Gelegenheit von routinemäßig aus anderem Anlass vorgesehenen Wartungsarbeiten.

Für die Zuordnung der Einflussgrößen oder des erfassten Messwerts zu bestimmten Verwendungen der Maschinenkomponenten kann ein so genannter "Anwendungsschlüssel" definiert werden, der in einer standardisierten Form Anwendung findet und zugeordnete Einflussgrößen miteinander verkoppelt. Durch einen solchen Anwendungsschlüssel kann die maschinelle Abarbeitung des Prozesses zur Auffindung der jeweils geeigneten Handlungsempfehlung vereinfacht werden.

Wesentlich ist somit für das erfindungsgemäße Verfahren, dass in einem automatisierten Prozess auf Basis von empirisch ermittelten oder theoretisch formulierten Informationen, die in einer Datenbank abgelegt sind, das für die jeweilige Anwendung optimal geeignete Maschinenelement treffsicher ermittelt wird und zwar ausgehend von der jeweiligen Anwendung. Die hierzu genutzten, in der Datenbank abgelegten Informationen beschreiben dabei die zwischen der jeweiligen Anwendung, der für sie geltenden Einflussgrößen und deren Wechselwirkungen bestehenden Zusammenhänge und können im Sinne eines selbstlernenden Systems durch wiederholtes Einspeisen neu gewonnener Informationen in ihrer Qualität und Aussagekraft laufend verbessert werden.

Das erfindungsgemäße System kann dabei so ausgelegt sein, dass es bei neuen Anwendungen, zu denen es noch keine direkt zugeordneten Informationen in der Datenbank gibt, beispielsweise anhand der dieser neuen Anwendung zugeordneten Einflussgrößen und der für sie jeweils ermittelten oder formulierten Wechselwirkungen aus den in der Datenbank hinterlegten Informationen die nächstkommende Anwendung ermittelt und auf Grundlage dieser nächstkommenden Anwendung einen Vorschlag für ein zu verwendendes Maschinenelement macht. Auf diese Weise kann in einem iterativen Prozess auch für eine neue Anwendung ein optimal geeignetes Maschinenelement schnell ermittelt werden, ohne dass dazu aufwändige, zeitraubende Versuche durchgeführt werden müssen.

Die Vorteile der erfindungsgemäßen Vorgehensweise bestehen somit in
- einer detaillierten, anwendungsspezifischen Betrachtung und Dimensionierung der Auslegung nach beliebigen Kriterien,
- einer optimalen Ausnutzung der dem jeweils betrachteten Maschinenelement tatsächlich innewohnenden Produkt- bzw. Materialeigenschaften und der dadurch unter Berücksichtigung der Besonderheiten des jeweiligen Anwendungsfalls bedingten tatsächlichen Lebenserwartung,
- der zielgerichteten Vermeidung eines zu frühen oder zu späten Ersatzes des Maschinenelements und einer damit einhergehend optimalen Ausnutzung der Ressource, die das jeweilige Maschinenelement darstellt,
- der Vermeidung von unkontrollierten Ausfällen, die im Stand der Technik aufgrund der Auswahl von nach den bisher berücksichtigten Auswahlkriterien zwar zureichenden, in der Praxis sich aber als untauglich erweisenden Maschinenelementen oder aufgrund nicht erkannter Wechselwirkungen von Einflussgrößen verursacht werden können,
- der kontinuierlichen Verbesserung der Vorhersagen anwendungsspezifischer Fragestellungen,
   und
- der gezielten, wirtschaftlichen Produktentwicklung für spezielle Problemstellungen, wobei hier der besondere Vorteil des erfindungsgemäßen Vorgehens darin besteht, dass als Maschinenkomponenten nicht nur einzelne Bauteile oder -gruppen bei der Auswahl berücksichtigt werden können, sondern dass das Ergebnis der erfindungsgemäßen Vorgehensweise bei der Bestimmung der für die jeweilige Anwendung optimierten Komponente auch Vorschläge zur Auswahl bestimmter Bauteile, Materialien oder Verfahrensparameter sein können, mit denen sich ein Maschinenelement oder eine aus mehreren interagierenden Maschinenelementen gebildete Baugruppe ("Aggregat") herstellen lässt, die jeweils optimal an die Anforderungen angepasst sind, die sich aus der vorgesehenen Verwendung ergeben.

Anwendungsbezogene Einflussgrößen können sein
- mechanische Belastungen (Drehzahl, Drehmoment, Vorspannkräfte, Antriebsgeometrie, Reibpaarung, Lastwechsel, Lastzyklen, Geschwindigkeiten, Beschleunigungen, Zug- oder Druckspannungen, sonstige dynamische oder statische Belastungen);
- Umweltbedingungen (Atmosphäre, in der die Anwendung stattfindet, Umgebungsfeuchte und -temperatur, Verschmutzung, Materialpaarung, Druck),
- Eigenschaften des Materials, aus dem die Maschinenkomponente besteht (Materialverhalten bei Erwärmung, unter Last, unter Lastwechsel, bei Reibung),
- geometrische Gestalt und Qualität der Maschinenkomponente.

Das an der jeweils überwachten Maschinenkomponente erfasste Messergebnis kann mit allen denkbaren Einrichtungen zur Datenübertragung zu einem zentralen Rechensystem übertragen werden, in dem die erfindungsgemäß genutzten Informationen hinterlegt und die jeweilige Interpretation des Messwerts vorgenommen werden. Das zentrale Rechensystem gibt dann, ebenfalls über eine geeignete Datenübertragungseinrichtung, die aus dem Messwert ermittelte Handlungsempfehlung an den Maschinenbetreiber zurück oder veranlasst selbsttätig die sich daraus gegebenenfalls ergebenden Schritte.

Nachfolgend wird ein die Erfindung typisches Ausführungsbeispiel beschrieben.

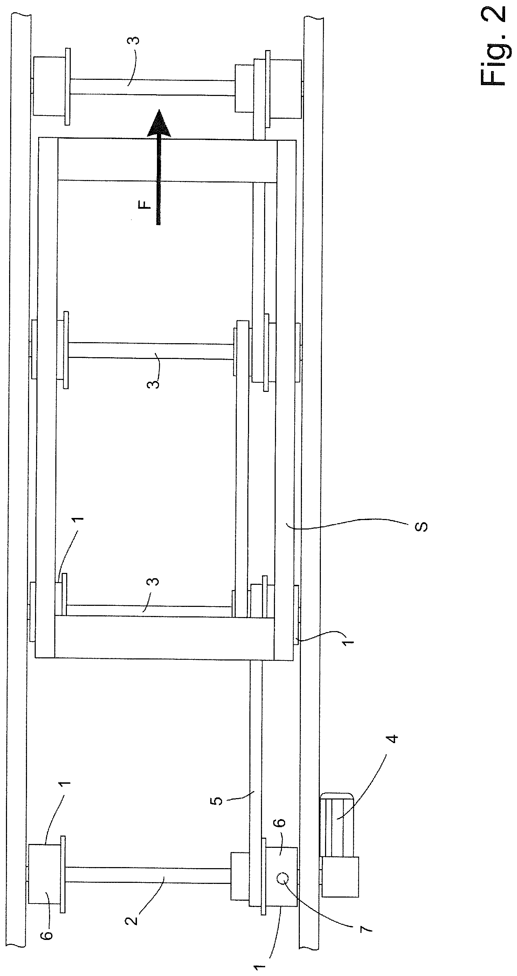

Fig. 2 zeigt hierzu eine Fördereinrichtung F in Draufsicht.

Bei der modernen Fertigung von Automobilen werden die jeweiligen Baugruppen, die Karosserie oder das bereits teilweise zusammengebaute Fahrzeug auf Schlitten über Transportbahnen befördert. Die Schlitten S solcher in der Praxis auch "SKID-Systeme" genannten Fördereinrichtungen F laufen dabei über Rollen 1, die an Wellen 2,3 gelagert sind.

Eine Welle 2 ist über einen Elektromotor 4 angetrieben, während die anderen Wellen 3 mit der angetriebenen ersten Welle 2 über einen Riemenantrieb 5 verkoppelt sind.

Die Rollen 1 tragen an ihrem Umfang eine Ummantelung 6 aus einem Polyurethan-Werkstoff ("PU-Werkstoff") oder einem anderen Elastomer. Die Ummantelung 6 weist dementsprechend einerseits eine gewisse Elastizität und andererseits eine hohe Reibung auf, um eine sichere und ausreichend gedämpfte Ankopplung der voranzutreibenden Schlitten zu sichern (http://www.logsystems.de/skid.html).

Die Rollen 1 von SKID-Systemen unterliegen hohen Belastungen und einem dementsprechend hohen Verschleiß. Gleichzeitig kann der unvorhergesehene Ausfall einer solchen Rolle 1 den Stillstand einer ganzen Fertigungsstraße bedeuten. Um dies zu vermeiden, werden die Rollen 1 bei konventionellen SKID-Systemen in regelmäßigen, fest vorgegebenen Zeitabständen ausgetauscht.

Bei einem erfindungsgemäßen Skid-System F wird mindestens eine der Rollen 1 mit einem Sensor 7 ausgestattet, der die Temperaturentwicklung in der PU-Ummantelung 6 der Rolle 1 erfasst.

Im Zuge des erfindungsgemäßen Verfahrens werden die bekannten Anwendungsfälle, in denen beispielsweise die hier beispielhaft betrachteten Rollen 1 zum Einsatz kommen, erfasst. Dazu werden in einem Anwendungsschlüssel Kundendaten, Einsatzfälle und verwendete Produkte, Produktionsbedingungen, Einsatzbedingungen etc. detailliert erfasst. Auf geeigneten Testständen wird dann das für den jeweiligen Anwendungsfall typische Anwendungsscenario nachgebildet und für diese spezielle Anwendung beispielsweise Lebensdaueruntersuchungen durchgeführt. Die auf diese Weise aus den praktischen Kundenerfahrungen oder anhand der Testergebnisse gewonnenen Erkenntnisse werden Teile des in der Datenbank abgelegten Pools von miteinander verknüpften Informationen.

Diese Informationen bilden die unter den jeweiligen Einsatzbedingungen zu erwartende Lebensdauer sowie das beim Anwendungsfall "SKID-System" zu erwartende Einsatzverhalten der Rollen 1 ab und korrelieren dies beispielsweise mit der Temperaturentwicklung im PU-Material der PU-Ummantelung 6 der Rolle 1.

Der Sensor 7 sendet die von ihm erfassten Messwerte an eine zentrale, hier nicht gezeigte Datenverarbeitung, in der die Auswertung der Messwerte vorgenommen und aus dieser Auswertung eine Handlungsempfehlung abgeleitet wird, aufgrund dessen gegebenenfalls anschließend ein Ersatz oder eine allgemeine Wartung der Rolle 1 vorgenommen wird.

Demnach liegt die vom Sensor 7 gemessene Temperatur der PU-Ummantelung 6 im Normalfall in einem bestimmten Normal-Temperaturbereich. Mit zunehmender Einsatzdauer ändern sich das Abrollverhalten der Schlitten S auf den Rollen 1 in Folge von verschiedenen Einflussgrößen, wie Alterung der Ummantelung, Materialschwankungen oder -ermüdung, geometrischen Fehlern bei der Ausrichtung der einzelnen Bauteile zueinander, wie Fluchtungsfehlern, Änderungen des Zustands der mit den Schlitten S in Kontakt kommenden Umfangsfläche der Rollen 1 in Folge von Beschädigungen oder Abrieb. Verschleiß und Walkarbeit nehmen zu, so dass auch die Temperatur in der Ummantelung 6 zunimmt. Dementsprechend steigt die vom Sensor 7 gemessene Temperatur.

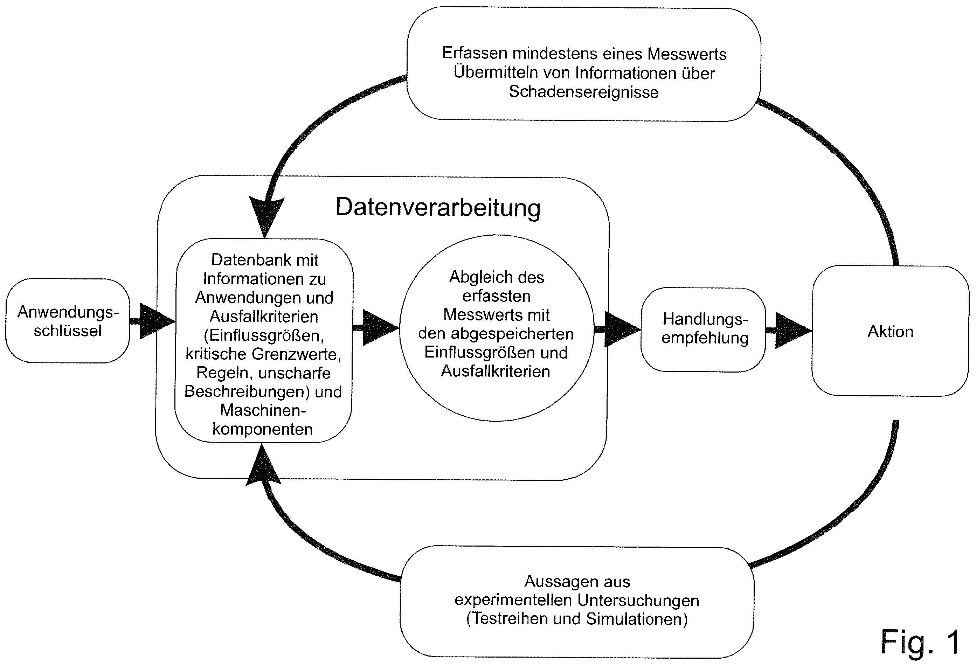

Die vom Sensor 7 erfasste Temperatur wird als Eingangsgröße in das auf der Datenverarbeitungseinrichtung laufende, in Fig. 1 dargestellte Interpretationssystem eingespeist und mit den dort abgelegten Erkenntnissen über die Einflussgrößen, die beim Anwendungsfall "SKID-System" wesentlich sind, und die damit korrelierte Temperaturentwicklung der Ummantelung 6 der Rolle 1 abgeglichen. Ergibt diese Interpretation beispielsweise, dass der Temperaturanstieg in einer von einem Standard-Verlauf abweichenden Geschwindigkeit fortschreitet, die auf ein vollständiges Versagen, d.h. das Erreichen der Lebensdauergrenze, in einem bestimmten, nahen Zeitraum deutet, so gibt das System die Handlungsempfehlung, die Rolle 1 in einem sicheren Abstand vor Erreichen des betreffenden Zeitraums zu ersetzen. Zeigt die erfasste Temperatur jedoch, dass die Temperaturentwicklung beispielsweise auf die jahreszeitbedingte Erwärmung der Umgebungstemperatur oder desgleichen zurückzuführen ist, so wird die Handlungsempfehlung "Normalbetrieb" ausgegeben, also kein Handlungsbedarf signalisiert.

Der vom Sensor 7 erfasste Temperaturverlauf und die gegebenenfalls weiteren verfügbaren Informationen über die Einsatzbedingungen, unter denen die Rollen 1 verwendet werden, werden mit den im Interpretationssystem abgelegten Informationen abgeglichen. Stichprobenweise kann dabei der tatsächliche Verschleißzustand der jeweils ausgewechselten Rolle 1 überprüft werden.

Stellt sich dabei eine signifikante Abweichung des prognostizierten Zustands vom tatsächlichen Zustand heraus, werden der erfasste Temperaturverlauf und die ihm zugeordneten weiteren Informationen über die Einsatzbedingungen in die dem Interpretationssystem zu Grunde liegende Datenbank aufgenommen und die dort abgelegten Informationen zu Einflussgrößen und Regeln zur Verkopplung und gegenseitigen Beeinflussung dieser Einflussgrößen entsprechend aktualisiert.

Genauso werden Informationen über unvorhergesehene, durch das Interpretationssystem nicht oder unrichtig vorausgesagte Schadensereignisse in das System eingespeist und zur Schärfung der dort hinterlegten Regeln und Einflussgrößen verwendet.

Auf diese Weise wird das Interpretationssystem laufend verbessert, so dass auch die Zielsicherheit der in der jeweiligen Handlungsempfehlung mündenden Prognoseergebnisse laufend verbessert wird.

### BEZUGSZEICHEN

- F: Fördereinrichtungen
- S: Schlitten

- 1: Rollen
- 2,3: Wellen
- 4: Elektromotor
- 5: Riemenantrieb
- 6: Ummantelung der Rollen 1
- 7: Sensor

## Patentansprüche

1. Verfahren zur computerunterstützten Prognose zukünftiger Betriebszustände von Maschinenkomponenten, umfassend folgende Arbeitsschritte:
A) Für die jeweils betrachtete Maschinenkomponente wird mindestens ein Parameter ausgewählt, der für den Zustand der jeweils betrachteten Maschinenkomponente repräsentativ ist;
B) Der Parameter wird im laufenden Einsatz der jeweils betrachteten Maschinenkomponente als Messwert erfasst;
C) Der erfasste Messwert wird unter Berücksichtigung des Anwendungsfalls, bei dem die jeweils betrachtete Maschinenkomponente zum Einsatz kommt, in einen automatisch ablaufenden Prozess zur Auffindung einer Handlungsempfehlung eingespeist, wobei folgende Vorgehensweise zu Grunde gelegt wird:
C.a) Für die jeweils betrachtete Maschinenkomponente sind Eigenschaften und die diese Eigenschaften bestimmenden Einflussgrößen ermittelt worden;
C.b) Für die jeweils betrachtete Maschinenkomponente sind die in Frage kommenden Anwendungen bestimmt, die Einflussgrößen, denen die Maschinenkomponente bei der jeweiligen Anwendung ausgesetzt ist, ermittelt, und es ist bestimmt worden, welche Einflussgrößen dementsprechend bei der Interpretation des erfassten Messwertes und der daraus abgeleiteten Handlungsempfehlung zu betrachten sind;
C.c) Aus beim praktischen Einsatz der betrachteten Maschinenkomponente gewonnenen Aussagen zu den zu betrachtenden Einflussgrößen oder aus auf die zu betrachtenden Einflussgrößen bezogene Aussagen, die durch systematische experimentelle Untersuchungen gewonnen werden, werden die Wechselwirkungen und Auswirkungen der zu betrachtenden Einflussgrößen ermittelt und in Zusammenhang mit bestimmten Schadensereignissen gebracht;
C.d) Die in Arbeitsschritt C.c) zu den Wechselwirkungen und dadurch beeinflussten Schadensereignissen ermittelten Informationen werden als maschinenlesbare Daten in eine Datenbank eingespeist;
C.e) Die jeweilige Anwendung, der erfasste Messwert und die zu betrachtenden Einflussgrößen werden als Eingangsgrößen in einen auf einem Computer laufenden Auswahlalgorithmus eingespeist, der unter Berücksichtigung der Eingangsgrößen anhand der in der Datenbank abgelegten Informationen die für die Verwendung bei der jeweiligen Anwendung optimal passende Handlungsempfehlung auswählt;
C.f) Mindestens eine der betrachteten Maschinenkomponente, für die der jeweils betrachtete Messwert erfasst und in der im Arbeitsschritt C.e) angegebenen Weise interpretiert wird, wird hinsichtlich des Anwendungsfalls, bei dem sie eingesetzt wird, eindeutig identifiziert;
C.g) Dazu wird die mindestens eine der betrachteten Maschinenkomponenten in ihrem praktischen Einsatz anhand eines Identifikationsmittels identifiziert und überwacht, wobei die Überwachung zum Erfassen des Messwerts und mindestens drei weiterer Kennwerte dient, wobei (i) einer der mindestens drei weiteren Kennwerte eine Aussage über die Zeitdauer, die zwischen dem Beginn der Nutzung und der Erfassung des jeweiligen Messwerts vergangen ist, liefert und (ii) zwei weitere Kennwerte der mindestens drei Kennwerte jeweils eine Aussage über einen jeweiligen äußeren Einfluss, insbesondere Temperatur und/oder Atmosphäre und/oder Umgebungsfeuchte und/oder Verschmutzung und/oder Druck, dem die mindestens eine der betrachteten Maschinenkomponenten im Einsatz ausgesetzt war, liefern, und wobei nicht jede betrachtete Maschinenkomponente überwacht wird;
C.h) Die durch die Überwachung im Arbeitsschritt C.g) erfassten Aussagen über den Messwert und die weiteren Kennwerte werden als Einflussgrößen in den mit Arbeitsschritt C.c) beginnenden Prozess eingespeist.

2. Verfahren nach Anspruch 1, **dadurch gekennzeichnet, dass** im Fall, dass sich bei laufender Nutzung des Verfahrens im Arbeitsschritt C.c) herausstellt, dass noch nicht identifizierte Einflussgrößen existieren, so werden diese neu erkannten Einflussgrößen zur Gruppe der zu betrachtenden und in Wechselwirkung mit anderen stehenden Einflussgrößen oder damit in Zusammenhang gestellten Schadensereignissen hinzugefügt.

3. Verfahren nach einem der voranstehenden Ansprüche, **dadurch gekennzeichnet, dass** die Datenbank, in die im Arbeitsschritt C.d) die zuvor ermittelten Informationen eingespeist werden, ein, zwei oder mehr Einzeldatenbanken umfasst, die jeweils auf bestimmte Anwendungsfälle bezogene maschinenlesbare Daten enthalten.

4. Verfahren nach einem der voranstehenden Ansprüche, **dadurch gekennzeichnet, dass** eine repräsentative Anzahl von Maschinenkomponenten in der jeweiligen Anwendung überwacht wird.

5. Verfahren nach einem der voranstehenden Ansprüche, **dadurch gekennzeichnet, dass** das Identifikationsmittel neben Informationen, die die jeweilige Maschinenkomponente eindeutig identifiziert, Informationen über die Beschaffenheit der Maschinenkomponente enthält.

6. Verfahren nach einem der voranstehenden Ansprüche, **dadurch gekennzeichnet, dass** im Arbeitsschritt C.g) als weiterer Kennwert die Zeitdauer erfasst wird, die zwischen dem Beginn der Nutzung und einem durch Verschleiß erforderlich werdenden Auswechseln vergeht.

7. Verfahren nach einem der voranstehenden Ansprüche, **dadurch gekennzeichnet, dass** die Überwachung im Arbeitsschritt C.g) Aussagen über eine Menge von zwei oder mehr weiteren Kennwerten liefert.

8. Verfahren nach einem der voranstehenden Ansprüche, **dadurch gekennzeichnet, dass** das Identifikationsmittel derart ausgerüstet ist, dass es Aussagen über den inneren Zustand und die Belastungen des Maschinenelements im Betrieb liefert.

9. System zur computerunterstützten Prognose zukünftiger Betriebszustände von Maschinenkomponenten, umfassend eine Datenbank und weitere Mittel zum Ausführen des Verfahrens nach einem der Ansprüche 1 bis 8.

## Claims

1. Method for computer-assisted prediction of future operating states of machine components, comprising the following steps:
A) For a respective machine component under consideration, at least one parameter is selected that is representative of the condition of the machine component under consideration;
B) The parameter is captured as a measured value during ongoing use of the machine component under consideration;
C) The captured measured value is fed into an automatic process for finding an action recommendation, while taking into account the application in which the machine component under consideration is used, based on the following procedure:
C.a) For the respectively considered machine component, properties and the influencing factors that determine these properties have been determined;
C.b) For the respectively considered machine component, the relevant applications have been determined, the influencing factors to which the machine component is exposed in the respective application have been identified, and it has been determined which influencing factors are to be taken into account when interpreting the captured measurement value and the resulting action recommendation;
C.c) Based on statements obtained from the practical use of the machine component under consideration regarding the influencing factors to be considered, or from statements relating to the influencing factors to be considered obtained through systematic experimental investigations, the interactions and effects of the influencing factors to be considered are determined and linked to specific damage events;
C.d) The information determined in work step C.c) on the interactions and damage events influenced by them is fed into a database as machine-readable data;
C.e) The respective application, the recorded measurement value and the influencing factors to be considered are fed as input variables into a selection algorithm running on a computer, which selects the most suitable action recommendation for use in the respective application based on the information stored in the database, taking into account the input variables and;
C.f) At least one of the machine components under consideration, for which the respective measured value is captured and interpreted in the manner specified in the work step C.e), is uniquely identified with regard to the application in which it is used;
C.g) Thereto, the at least one of the machine components under consideration is identified and monitored in its practical use by means of an identification device, whereby the monitoring serves to capture the measured value and at least three further characteristic values, whereby (i) one of the at least three further characteristic values provides information about the time that has elapsed between the start of use and the recording of the respective measured value, and (ii) two further characteristic values of the at least three characteristic values each provide information about a respective external influence, in particular temperature and/or atmosphere and/or ambient humidity and/or contamination and/or pressure, to which the at least one of the machine components under consideration was exposed during use, and wherein not every machine component under consideration is monitored;
C.h) The statements about the measured value and the other characteristic values captured by the monitoring in step C.g) are fed into the process beginning with steps C.c) as influencing variables.

2. Method according to claim 1, **characterised in that** that if, during ongoing use of the method it transpires in step C.c) that there are still unidentified influencing factors, these newly identified influencing factors are added to the group of influencing factors to be considered and being in interaction with other influencing factors or with damage events being put into association therewith.

3. Method according to one of the preceding claims, **characterised in that** the database into which the previously determined information is fed in the step C.d) comprises one, two or more individual databases, which respectively contain machine-readable data relating to specific use cases.

4. Method according to one of the preceding claims, **characterised in that** a representative number of machine components in the respective application is monitored.

5. Method according to one of the preceding claims, **characterised in that** the identification means contains information about the nature of the machine component in addition to information that uniquely identifies the respective machine component.

6. Method according to one of the preceding claims, **characterised in that**, in step C.g), the time period between the start of use and a replacement necessitated by wear is recorded as a further characteristic value.

7. Method according to one of the preceding claims, **characterised in that** the monitoring in step C.g) provides information about a set of two or more further characteristic values.

8. Method according to one of the preceding claims, **characterised in that** the identification means is equipped in such a way that it provides information about the internal state and the loads on the machine element during operation.

9. System for computer-assisted prediction of future operating states of machine components, comprising a database and further means for carrying out the method according to one of claims 1 to 8.

## Revendications

1. Méthode de prédiction assistée par ordinateur des états de fonctionnement futurs de composants de machines, comprenant les étapes suivantes :
A) Pour a composant de machine respectif considéré, au moins un paramètre représentatif de l'état du composant de machine considéré est sélectionné ;
B) Le paramètre est saisi sous forme de valeur mesurée pendant le fonctionnement du composant de machine considéré ;
C) La valeur mesurée enregistrée est introduite dans un processus automatique pour trouver une recommandation d'action, en tenant compte du cas d'application dans lequel le composant de machine considéré est utilisé, selon la procédure suivante :
C.a) Des propriétés du composant de machine considéré et les facteurs qui déterminent ces propriétés ont été déterminés ;
C.b) Pour le composant de machine respectif considéré, les applications possibles sont déterminées, les facteurs d'influence auxquels le composant de machine est exposé dans l'application respective sont déterminés, et les facteurs d'influence à prendre en compte dans l'interprétation de la valeur mesurée enregistrée et de la recommandation d'action qui en découle sont déterminés ;
C.c) À partir des conclusions tirées de l'utilisation pratique du composant de machine considéré concernant les facteurs d'influence à prendre en compte ou à partir des conclusions relatives aux facteurs d'influence à prendre en compte obtenues par des études expérimentales systématiques, les interactions et les effets des facteurs d'influence à prendre en compte sont déterminés et mis en relation avec certains événements dommageables ;
C.d) Les informations déterminées à l'étape C.c) concernant les interactions et les événements dommageables influencés par celles-ci sont enregistrées sous forme de données lisibles par machine dans une base de données ;
C.e) L'application respective, la valeur mesurée enregistrée et les facteurs d'influence à prendre en compte sont introduits comme variables d'entrée dans un algorithme de sélection fonctionnant sur un ordinateur qui, en tenant compte des variables d'entrée et, sélectionne la recommandation d'action la mieux adaptée à l'utilisation dans l'application concernée basé sur des informations stockées dans la base de données ;
C.f) Au moins l'un des composants de machine considérés, pour lequel la valeur mesurée considérée est enregistrée et interprétée de la manière indiquée à l'étape C.e) , est uniquement identifié en fonction de l'application dans laquelle il est utilisé ;
C.g) À cette fin, au moins l'un des composants de machine considérés est identifié et surveillé dans son utilisation pratique à l'aide d'un moyen d'identification, où la surveillance sert à enregistrer la valeur mesurée et au moins trois autres valeurs caractéristiques, où (i) l'une des au moins trois autres valeurs caractéristiques fournit une indication sur la durée écoulée entre le début de l'utilisation et l'enregistrement de la valeur mesurée correspondante, et (ii) deux autres valeurs caractéristiques parmi les au moins trois valeurs caractéristiques fournissent respectivement une indication sur une influence extérieure respective, en particulier la température et/ou l'atmosphère et/ou l'humidité ambiante et/ou la pollution et/ou la pression, à laquelle au moins l'un des composants de machine considérés a été exposé pendant son utilisation, et où pas tous les composants de machine considérés sont surveillés ;
C.h) Les informations sur la valeur mesurée et les autres valeurs caractéristiques enregistrées lors de la surveillance à l'étape C.g) sont introduites en tant que facteurs d'influence dans le processus commençant à l'étape C.c).

2. Méthode selon la revendication 1, **caractérisé en ce que** dans le cas où, lors de l'utilisation de la méthode à l'étape C.c) , il s'avère qu'il existe des facteurs d'influence non encore identifiés, ces facteurs d'influence nouvellement reconnus sont ajoutés au groupe des facteurs d'influence à prendre en compte et en interaction avec d'autres ou avec des événements dommageables qui y sont associés.

3. Méthode selon l'une des revendications précédentes, **caractérisé en ce que** la base de données dans laquelle les informations déterminées précédemment sont enregistrées à l'étape C.d) comprend une, deux ou plusieurs bases de données individuelles qui contiennent respectivement des données lisibles par machine relatives à des cas d'application spécifiques.

4. Méthode selon l'une des revendications précédentes, **caractérisé en ce qu'**un nombre représentatif de composants de machines dans l'application respective est surveillé.

5. Méthode selon l'une des revendications précédentes, **caractérisé en ce que** le moyen d'identification contient, outre des informations qui uniquement identifient le composant de machine concerné, des informations sur la nature du composant de machine.

6. Méthode selon l'une des revendications précédentes, **caractérisé en ce que**, dans l'étape C.g), la durée écoulée entre le début de l'utilisation et un remplacement rendu nécessaire par l'usure est enregistrée comme valeur caractéristique supplémentaire.

7. Méthode selon l'une des revendications précédentes, **caractérisé en ce que** la surveillance à l'étape C.g) fournit des informations sur un ensemble de deux ou plusieurs autres valeurs caractéristiques.

8. Méthode selon l'une des revendications précédentes, **caractérisé en ce que** le moyen d'identification est équipé de manière à fournir des informations sur l'état interne et les contraintes de l'élément de machine en fonctionnement.

9. Système pour la prédiction assistée par ordinateur des états de fonctionnement futurs de composants de machines, comprenant une base de données et d'autres moyens pour exécuter la méthode selon l'une des revendications 1 à 8.
